Europäisches Patentamt

European Patent Office

Office européen des brevets

(19)

(11) Publication number : **0 326 410 B1**

# (12) EUROPEAN PATENT SPECIFICATION

(45) Date of publication of patent specification :
20.01.93 Bulletin 93/03

(51) Int. Cl.[5] : **B32B 29/04,** B32B 27/20,
B32B 33/00

(21) Application number : 89300814.4

(22) Date of filing : 27.01.89

(54) **Waterproof laminated paper and production process thereof.**

(30) Priority : 28.01.88 JP 18374/88

(43) Date of publication of application :
02.08.89 Bulletin 89/31

(45) Publication of the grant of the patent :
20.01.93 Bulletin 93/03

(84) Designated Contracting States :
AT BE CH DE ES FR GB GR IT LI LU NL SE

(56) References cited :
GB-A- 1 300 319
GB-A- 2 026 942
GB-A- 2 119 707

(73) Proprietor : **MITSUI PETROCHEMICAL INDUSTRIES, LTD.**
**2-5, Kasumigaseki 3-chome Chiyoda-ku Tokyo 100 (JP)**
Proprietor : **JUJO PAPER CO., LTD.**
**No. 4-1, Oji 1-chome**
**Kita-ku Tokyo (JP)**

(72) Inventor : **Murase, Tohru c/o Jujo Paper Co., Ltd.**
**Central Research Laboratory 21-1, Oji 5-chome**
**Kita-ku Tokyo (JP)**
Inventor : **Sasaki, Toshio c/o Jujo Paper Co., Ltd.**
**Central Research Laboratory 21-1, Oji 5-chome**
**Kita-ku Tokyo (JP)**
Inventor : **Konno, Mitsugi c/o Jujo Paper Co., Ltd.**
**Central Research Laboratory 21-1, Oji 5-chome**
**Kita-ku Tokyo (JP)**

(74) Representative : **Myerscough, Philip Boyd et al**
**J.A.Kemp & Co. 14, South Square Gray's Inn**
**London, WC1R 5EU (GB)**

## Description

BACKGROUND OF THE INVENTION

1. Field of the Invention

The present invention relates to a waterproof laminated paper having low static (or electrostatic) chargeability and an excellent water resistance, writability, printability, weathering resistance, tear strength, dimensional stability, and opacity.

2. Description of the Related Art

Known in the art are supports for photographic papers having three layers of a paper sheet as a substrate layer, a polyethylene coating layer containing no inorganic fillers on the surface of the substrate layer, and a polyethylene coating layer containing an inorganic filler such as titanium dioxide, zinc oxide or zinc sulfide on the surface of the polyethylene coating layer containing no fillers. In the above-mentioned known three layer laminated papers, the resin layer is opacified by including an inorganic filler therein and the resin layer containing no inorganic fillers is located between the paper substrate and the filler-containing resin layer to prevent the decrease in the adhesion power between the surface of the paper substrate and the polyethylene coating layer due to the inclusion of the inorganic filler in the resin layer. In addition, also known in the art are those having a paper substrate and a polyethylene layer containing an inorganic filler directly laminated on the paper substrate without the presence of the intervening layer containing no inorganic fillers.

In the above-mentioned supports for photographic paper, a polyethylene resin layer is laminated on a surface of the paper substrate to make the surface of the photographic paper smooth so that fine photographic image is printed thereon. However, as a result of the lamination of the resin layer, the surface of the support becomes transparent. Accordingly, white background is formed by including a pigment in the resin layer so as to obtain a clear photographic image. Namely, the smoothness of a surface of the resin layer in the support for photographic paper should not be impaired by the incorporation of an inorganic pigment included in the polyethylene surface layer. For this reason, the incorporation amount of the inorganic pigment is limited and the practical limitation is considered to be about 7% by weight.

Contrary to the above, the waterproof laminated paper according to the present invention should be provided with printability and writability. For this reason, appropriate or moderate roughness is required on the surface of the waterproof laminated paper. However, the incorporation of about 7% by weight of an inorganic filler, as in the case of the photographic support, will not provide the desired surface roughness and, therefore, there occur problems in fixation and drying of aqueous or oily printing ink or aqueous ink for writing. Furthermore, when the resultant paper is tried to write with a ball-point pen or pencil, the paper is not substantially written, as in the case of a flat or smooth film.

Furthermore, even when a large amount of titanium dioxide or zinc oxide used for opacifying the support for printing paper is incorporated in the resin layer, a high static chargeability of the resin layer cannot be decreased, and, as a result, this causes serious problems when a large number of the sheets (or papers) possessing high static chargeability are continuously and automatically printed or statically and automatically copied, two or more sheets are allowed to be fed in an overlapping state by the mutual attraction force due to the static electricity between the sheets. Thus, the troubles such as the clogging of the sheets or papers are caused.

SUMMARY OF THE INVENTION

Accordingly, the objects of the present invention are to eliminate the above-mentioned problems of the prior art and to provide a waterproof laminated paper having an excellent water resistance, writability, printability, weathering resistance, tear strength, dimensional stability, and opacity, while high static chargeability of resins is decreased.

Other objects and advantages of the present invention will be apparent from the following description.

In accordance with the present invention, there is provided a waterproof laminated paper having a good printability and low static chargeability, comprising a laminated paper substrate having at least one thermoplastic resin layer laminated on a surface of the paper substrate, in which at least one top thermoplastic resin layer contains 20 to 80% by weight, preferably 30% to 50% by weight, of an inorganic filler therein.

In accordance with the present invention, there is also provided a process for producing the waterproof laminated paper comprising the steps of:

extruding (i) at least one thermoplastic resin, at a molten state, containing 20% to 80% by weight of an inorganic filler and (ii) at least one thermoplastic resin, at a molten state, containing no inorganic fillers through a T-die, while the resin layer (i) and the resin layer (ii) are laminated together prior to the extrusion from the T-die; and

laminating the extruded resin layers (i) and (ii) on the surface of a paper substrate such that the resin layer (ii) is brought into contact with the surface of the paper substrate, or

extruding a thermoplastic resin containing no inorganic fillers at a molten state onto a surface of the paper substrate, followed by extruding the thermoplastic resin containing 20% to 80% by weight, based on the weight of the total composition, of an inorganic filler at a molten state onto the thermoplastic resin layer.

DESCRIPTION OF THE PREFERRED EMBODIMENTS

It is not practically easy to produce a thin layer (e.g., about 10 $\mu$m thick) containing 20% by weight or more of an inorganic filler in the resin layer. This technique is only done from various trial and error methods. For this purpose it is advisable or recommendable to regulate the water content of a modifier such as calcium carbonate prior to the incorporation thereof, for example, to 500 ppm or less. It should be noted that the decrease of the water content of moisturized calcium carbonate to the desired low water content by drying is usually or substantially impossible.

In accordance with the preferred embodiment of the present invention, writability and printability, as well as a low static chargeability, can be advantageously obtained by the waterproof laminated paper that using an opacifying inorganic filler such as titanium dioxide in combination with a modifier, inorganic filler such as calcium carbonate and a similar inorganic filler which are capable of providing the desired writability and printability without substantially increasing the static chargeability, although the use of the opacifying agent such as titanium dioxide alone increases the static chargeability. The preferable waterproof laminated paper having the desired writability and printability and low static chargeability can be provided by including 20% to 80% by weight, more preferably 30% to 50% by weight, based on the weight of the composition, of a mixture of (A) the modifier such as calcium carbonate and (B) the opacifying inorganic filler such as titanium dioxide at a weight ratio of (A)/(B) of 99/1 to 55/45, more preferably 80/20 to 60/40 in at least one top layers (i.e., the outermost layer and, optionally, the next or successive inside layer or layers).

The average particle size of the inorganic filler usable in the present invention is preferably 0.01 to 10 $\mu$m, more preferably 0.1 to 5 $\mu$m from the standpoints of dispersibility of the inorganic filler in the resin layer and writability and printability provided with the inorganic filler to the resin layer.

Furthermore, regarding the specific surface area and the oil absorption, the titanium dioxide preferably has a specific surface area of 1 to 50 m$^2$/g (BET method, N$_2$) and an oil absorption of 10 to 50 ml/100 g, and the calcium carbonate (preferably heavy calcium carbonate) preferably has a specific surface area of 0.5 to 70 m$^2$/g, more preferably 1 to 30 m$^2$/g (BET method, N$_2$) and an oil absorption of 5 to 50 ml/100 g, more preferably 10 to 40 ml/100 g.

The other inorganic fillers usable in the present invention include, for example, talc, clay, kaolin, barium sulfate, calcium silicate, magnesium carbonate, zinc oxide, magnesium oxide, silicon oxide, diatomaceous earth, and magnetic iron oxide, and mixtures thereof.

A small amount of an organic filler such as carbon black, phenol resin, melamine, and urea, may be included, and further, a suitable fatty acid salt, tackifier, hydrophylically treated polyolefin wax, and the surface treated products thereof can be added as an auxiliary means of improving the dispersibility of the filler.

The paper usable as a substrate in the present invention may be any conventional paper and is prepared, for example, by treating a paper material preferably composed primarily of vegetable fibers and, if necessary, adding a filler dispersed uniformly in water by an appropriate dehydration treatment, to bond the respective fibers and the filler together, and drying by dehydration to form a sheet having a predetermined thickness and strength, and further includes papers prepared by making a sheet of a paper material having an appropriate addition of a chemical, and converted papers prepared by coating or impregnating a chemical on the paper. The paper should be selected in view of the final use of the film laminated paper, and a paper suitable for the required purpose should be selected. For example, when a strong water resistance is required, the paper itself should internally contain a water-resistant agent, to prevent water penetration after cutting.

The thermoplastic resins usable in the present invention include olefinic thermoplastic resins and polyesters. Examples of the olefinic thermoplastic resin usable in the present invention include 1-olefin homopolymers resins such as polyethylene and polypropylene, and copolymers of 1-olefins or 1-olefins and other monomers copolymerizable with 1-olefin. Examples of such monomers are vinyl acetate, ethyl acrylate, methyl methacrylate. These comonomers are used at only a small amount.

The preferable olefinic thermoplastic resin usable in the present invention are ethylenic resins a melt flow rate (MFR) of 3 to 20 g/10 min at 190°C and a melt tension of 0.3 to 11 g at 190°C (L/D of extruder orifice of 3.8, extrusion speed of 15 mm/min and a take-off speed of 15 m/min). The propylene resins preferably has an MFR of 15 to 50 g/10 min at 230°C, a melt tension of 0.3 to 3.3 g (L/D = 3.8, extrusion speed = 15 mm/min and a take-off speed = 15 m/min).

The waterproof laminated paper of the present invention is preferably produced by extruding a thermoplastic resin layer containing no inorganic filler on at least one surface of the paper from a T-die film extruder, and then extruding thereon a thermoplastic resin layer containing an inorganic filler from a T-die film extruder, to effect the lamination of three layers.

Although there are no severe critical limitations to the thickness of the resin layers, the resin layer(s) containing the inorganic filler preferably has a thickness of 3 to 20 $\mu$m, more preferably 5 to 10 $\mu$m and the inner resin layer(s) containing no inorganic filler or next to the paper substrate preferably has a thickness of 5 to 25 $\mu$m, more preferably 5 to 15 $\mu$m.

Adhesiveness between the layers is higher when the top layer(s) or outermost resin layer and the inner resin layer containing no filler or next to the paper substrate are composed of the same kind of resin.

As mentioned above, according to the present invention, the desired waterproof laminated paper can be produced by lamination bonding the thermoplastic resin layer(s) to at least one surface of the paper substrate, while the thermoplastic resin(s) containing the inorganic filler are extruded from a T-die type film forming machine. The resultant laminate thus obtained has interlayer adhesiveness sufficient to resist against the common use.

More preferably, the desired waterproof laminated paper according to the present invention can be produced by existing at least one resin layer containing no inorganic fillers between the paper substrate and the resin layer containing an inorganic filler. According to this method, even when the thickness of the resin layer containing an inorganic filler is decreased, the stable extrusion molding can be facilitated without causing the operational problems such as film breakage.

Of course, it is possible to laminate the resin layers containing an inorganic filler directly to the both surfaces of the paper substrate or to laminate the resin layers containing an inorganic filler after or simultaneously with the lamination of the resin layers containing no inorganic fillers to both surfaces of the paper substrate.

Further, to enhance the adhesitivity to paper, preferably the surface of the paper substrate is subjected to a flame treatment, a corona discharge treatment, and a heat treatment (e.g., at 50°C to 150°C) before the extrusion coating. Alternately, the surface of the resin layer to be laminated onto the paper substrate is subjected to, for example, an ozone treatment to increase the adhesiveness between the layers. Thus, the frequency of generating the deteriorated resin contamination caused from die land deposits of the resin and the like can be decreased and the deterioration of the resins causing the decrease in the tear strength can be prevented.

The smoothness of the surface of the waterproof laminated paper obtained by lamination of the resin layers on the paper substrate can be varied by appropriately selecting the content and the average particle size of the inorganic filler, and the film thickness of the outermost layer. In particular, when the cooling roll pattern of the laminator is changed, the surface of the product can be advantageously given a matt finish and can increase the pencil writability. The term "matt" finish used herein means that having a gloss of 30% determined at an angle of inclination of 60°. Further, if necessary, an antistatic agent, an ink adhesion improver, and a UV-ray absorber, can be contained in the at least one resin layer, or coated on the surface of the outermost layer.

In the present invention, since a paper is used as the substrate, the tear strength and dimensional stability of the sheet can be improved, but on the other hand, the use of a paper raises the problem of a lowering of the opacity and writability due to the lamination of a thermoplastic resin thereof. However, when the specified kinds of inorganic fillers are used, in combination, according to the preferred embodiment of the present invention, the desired writability and printability can be obtained from the resin layer without a substantial increase in the static chargeability.

When a mixture of inorganic fillers comprising 99 to 55 parts by weight, preferably 80 parts to 60 parts of heavy calcium carbonate and 1 to 45 parts by weight, preferably 20 to 40 parts by weight of rutile type titanium dioxide is incorporated into the outermost polyolefin resin layer in an amount of 20 to 80 parts by weight, preferably 30 to 50 parts by weight, based on 100 parts by weight of the total composition. The surface resistivity of the outermost (or top) resin layer is $1 \times 10^{10}$ to $9 \times 10^{15}$ $\Omega$, which is much lower than the surface resistivity (i.e., more than $10^{16}$ $\Omega$) of the layer containing only the titanium dioxide as the inorganic filler. The surface resistivity of the laminate according to the present invention is determined at a temperature of 23°C and a relative humidity of 60%.

## Examples

The present invention will now be further illustrated by, but is by no means limited to, the following Examples.

Example 1

A mixture was prepared of 75% by weight of a low density polyethylene having an MFR of 11 g/10 min, a density 0.916 g/cm$^3$, and a melt tension of 1.3 g, in a molten state, and 25% by weight of a 95/5 mixture of calcium carbonate having an average particle size of 2 μm and titanium dioxide having an average particle size of 0.2 μm. The mixture was extruded through a T-die, at a temperature of 290°C, onto both surfaces of a water-resistant copying paper having a thickness 60 μm and a width of 500 mm to obtain a laminated paper film, while ozone-containing air was blown to the surface of the molten resin film to be laminated to the paper. The lamination rate of the molten film was 100 m/min, the air gap was 130 mm, the ozone concentration was 40 g/m$^3$ and the feed rate of the ozone was 2 m$^3$/hr.

The water-resistant copying paper used in this Example was Xerograph copying paper having a Stöckigt sizing degree of 30 sec obtained by using, as a base, fine paper having a basis weight of 48 g/m$^2$ and by size press coating the fine paper with a coating composition containing starch/polyvinyl alcohol of 80/20 at a coverage of 1 to 2 g/m$^2$.

Example 2

A waterproof laminated paper was obtained in the same manner as in Example 1, except that the weight ratio of calcium carbonate/titanium dioxide was changed to 80/20 and the inorganic filler content in the resin was varied as shown in Table 1.

Example 3

A 25% be weight amount of the low-density polyethylene used in Example 1 at a molten state is mixed with 75% by weight of a 60/40 (weight ratio) mixture of calcium carbonate and titanium dioxide. The low density polyethylene containing no inorganic fillers is separately prepared. The above-prepared resin layer containing no fillers and the above-prepared resin layer containing the inorganic fillers are co-extruded through a T-die at 290°C such that the resin layer containing no inorganic fillers is made the lower layer to be contacted with the paper substrate. Thus, the resin layers are laminated on the both surfaces of the same water-resistant paper as used in Example 1 by co-extrusion to obtain waterproof laminated paper.

Example 4

A 65% by weight amount of polypropylene having an MFR of 25 g/10 min a density of 0.91 g/cm$^3$, and a melt tension of 0.5 g at a molten state was mixed with 35% by weight of a 95/5 (weight ratio) mixture of calcium carbonate and titanium dioxide. The above-mentioned polypropylene containing no inorganic fillers was separately prepared. The above-prepared resin layer containing no fillers and the above-prepared resin layer containing the inorganic fillers were co-extruded through a T-die at 290°C such that the resin layer containing no inorganic fillers was made the lower layer to be contacted with the paper substrate and the resin layer containing the fillers was made the outermost layer. Thus, the resin layers were laminated on the both surfaces of the same water-resistant paper as used in Example 1 by co-extrusion to obtain waterproof laminated paper. The ozone treatment was applied to the surface of the lower resin layer to be bonded with the paper, in the same manner as in Example 1.

Example 5

A waterproof laminated paper was obtained in the same manner as in Example 4, except that a 80/10/10 (weight ratio) mixture of calcium carbonate, titanium dioxdie, and silica was used as the inorganic filler in an amount of 45% by weight (i.e., the amount of the polypropylene was 55% by weight) and that a fine paper having a basis weight of 70 g/m$^2$ was used as the paper substrate.

Example 6

A waterproof laminated paper was obtained in the same manner as in Example 5, except that 30% by weight of talc having an average particle size of 0.8 μm was used as the inorganic filler with 70% by weight of the polypropylene used in Example 5 and that the resin layer containing the above-mentioned filler was laminated to the both surfaces of the fine paper, without using the lower resin layer containing no inorganic filler, by extruding the resin layers through a T-die at 290°C, while the ozone treatment was carried out as mentioned above.

Example 7

A waterproof laminated paper was obtained in the same manner as in Example 5, except that 30% by weight of calcium carbonate was used as the inorganic filler with 70% by weight of the polypropylene.

Comparative Example 1

A laminated paper was obtained in the same manner as in Example 1, except that the low density polyethylene containing no inorganic fillers was used.

Comparative Example 2

A laminated paper was obtained in the same manner as in Example 6, except that the polypropylene containing no inorganic fillers was used.

Comparative Example 3 and 4

The water-resistant copying paper and the fine paper used in the above-mentioned Examples were directly evaluated, respectively.

Example 8, 9 and 10

Waterproof laminated papers were obtained in the same manner as in Example 4, except that the ratio of the calcium carbonate and the titanium dioxide, used as the inorganic filler, was changed as shown in Table 2.

Examples 11, 12 and 13 and Comparative Example 5

Waterproof laminated papers were obtained in the same manner as in Example 3, except that the amounts of the inorganic filler to that of the low density polyethylene were changed as shown in Table 2.

The results of the measurements of the physical properties of the waterproof laminated papers obtained in the above Examples and Comparative Examples are shown in Tables 1 and 2. These results were obtained by the methods shown below.

(1) Thickness: JIS (i.e., Japanese Industrial Standards) P-8118
(2) Opaqueness: JIS P-8138
(3) Water penetration elongation: Japan. TAPPI 27
(4) Water-resistant surface abrasion: JIS P-8136
(5) Writability: The writing test was carried out under a constant pressure by using a pencil having a pencil hardness of 2B under the following criteria.
◎ : Very good writing
o : Good writing
x : Substantially no writing
(6) Surface resistivity: determined at 23°C x 60% R.H. by using Model P-601, VE-30 manufactured by Kawaguchi Denki K.K. (Japan)
(7) Printability: Roland off-set printing machine model 202B was used under the following test conditions:
Size of printing paper: 297 x 420 mm (A3)
Paper feed speed: 8000 sheets/hr
Atmosphere in printing room: 20°C x 50% R.H.
Printing ink: POP K manufactured by Dainippon Ink and Chemicals, Inc.

Table 1

| | | Ex. 1 | Ex. 2 | Ex. 3 | Ex. 4 | Ex. 5 | Ex. 6 | Ex. 7 | Com.Ex.1 | Com.Ex.2 | Com.Ex.3 | Com.Ex.4 |
|---|---|---|---|---|---|---|---|---|---|---|---|---|
| | Base paper A | Water-resistant copying paper | Water-resistant copying paper | Water-resistant copying paper | Water-resistant copying paper | Fine paper | Fine paper | Fine paper | Water-resistant copying paper | Fine paper | Water-resistant copying paper | Fine paper |
| Outer-most layer B | Resin | PE | PE | PE | PP | PP | PP | PP | PE | PP | - | - |
| | MFR (g/10 min) | 11 | 11 | 11 | 25 | 25 | 25 | 25 | 11 | 25 | - | - |
| | Melt tension (g) | 1.3 | 1.3 | 1.3 | 0.5 | 0.5 | 0.5 | 0.5 | 1.3 | 0.5 | - | - |
| | Filler content (%) | 25 | 30 | 75 | 35 | 45 | 30 | 30 | None | None | - | - |
| | Filler $CaCO_3$/ $TiO_2$ (%) | 95/5 | 80/20 | 60/40 | 95/5 | 70/20 | - | 100/0 | - | - | - | - |
| | Other filler | - | - | - | - | Silica 10 | Talc 100 | - | - | - | - | - |
| | Thickness (μm) | 20 | 20 | 10 | 10 | 15 | 20 | 10 | 20 | 20 | - | - |
| Paper-side layer C | Resin | - | - | PE | PP | PP | - | PP | - | - | - | - |
| | Thickness (μm) | - | - | 10 | 10 | 10 | - | 10 | - | - | - | - |
| | Structure | B/A/B | B/A/B | B/C/A/C/B | B/C/A/C/B | B/C/A/C/B | B/A/B | B/C/A/C/B | B/A/B | B/A/B | - | - |

Composition

Table 1 (continued)

|  | Ex. 1 | Ex. 2 | Ex. 3 | Ex. 4 | Ex. 5 | Ex. 6 | Ex. 7 | Com.Ex.1 | Com.Ex.2 | Com.Ex.3 | Com.Ex.4 |
|---|---|---|---|---|---|---|---|---|---|---|---|
| Thickness ($\mu$) | 100 | 100 | 100 | 100 | 150 | 140 | 140 | 100 | 140 | 60 | 100 |
| Writability (pencil) | o | ⊙ | (o) | (o) | (o) | o | (o) | x | x | (o) | ⊙ |
| Opacity (%) | 89 | 91 | 95 | 90 | 92 | 89 | 88 | 86 | 84 | 87 | 85 |
| Water penetration elongation (%) | 0.30 | 0.30 | 0.30 | 0.30 | 0.35 | 0.35 | 0.35 | 0.30 | 0.35 | 3.0 | 3.5 |
| Water-resistant surface abrasion (times) | >100 | >100 | 80 | >100 | >100 | >100 | >100 | >100 | >100 | 3 | 0 |
| Surface resistivity ($\Omega$) | $2 \times 10^{15}$ | $5 \times 10^{14}$ | $4 \times 10^{11}$ | $8 \times 10^{13}$ | $5 \times 10^{12}$ | $9 \times 10^{14}$ | $9 \times 10^{13}$ | $>10^{16}$ | $>10^{16}$ | $2 \times 10^{11}$ | $2 \times 10^{11}$ |
| Printability Times of paper clogging occurred due to over-lapping feed when 2000 sheets of paper (A3 size) are printed in an off-set printing machine. | 2 | 0 | 0 | 0 | 0 | 1 | 0 | >10 | >10 | 0 | 0 |

Physical properties

EP 0 326 410 B1

Table 2

| | | | Ex. 4 | Ex. 8 | Ex. 9 | Ex. 10 | Ex. 3 | Ex. 11 | Ex. 12 | Ex. 13 | Com. Ex. 5 | Com. Ex. 6 |
|---|---|---|---|---|---|---|---|---|---|---|---|---|
| Compo-sition | Base paper A | | Water-resistant copying paper | Water-resistant copying paper | Water-resistant copying paper | Water-resistant copying paper | Water-resistant copying paper | Water-resistant copying paper | Water-resistant copying paper | Water-resistant copying paper | Water-resistant copying paper | Water-resistant copying paper |
| | Outer-most layer B | Resin | PP | PP | PP | PP | PE | PE | PE | PE | PE | PE |
| | | MFR (g/10 min) | 25 | 25 | 25 | 25 | 11 | 11 | 11 | 11 | 11 | 11 |
| | | Melt tension (g) | 0.5 | 0.5 | 0.5 | 0.5 | 1.3 | 1.3 | 1.3 | 1.3 | 1.3 | 1.3 |
| | | Filler content (%) | 35 | 35 | 35 | 35 | 75 | 50 | 30 | 25 | 10 | 15 |
| | | Filler $CaCO_3/TiO_2$ (%) | 95/5 | 75/25 | 55/45 | 40/60 | 60/40 | 60/40 | 60/40 | 60/40 | 0/100 | 50/50 |
| | | Thickness (μm) | 10 | 10 | 10 | 10 | 10 | 10 | 10 | 10 | 20 | 10 |
| | Paper-side layer C | Resin | PP | PP | PP | PP | PE | PE | PE | PE | - | PE |
| | | Thickness (μm) | 10 | 10 | 10 | 10 | 10 | 10 | 10 | 10 | - | 10 |

EP 0 326 410 B1

EP 0 326 410 B1

Table 2 (continued)

| | | Ex. 4 | Ex. 8 | Ex. 9 | Ex. 10 | Ex. 3 | Ex. 11 | Ex. 12 | Ex. 13 | Com.Ex.5 | Com.Ex.6 |
|---|---|---|---|---|---|---|---|---|---|---|---|
| | Structure | B/C/A/C/B | B/C/A/C/B | B/C/A/C/B | B/C/A/C/B | B/C/A/C/B | B/C/A/C/B | B/C/A/C/B | B/C/A/C/B | B/A/B | B/C/A/C/B |
| | Thickness ($\mu$) | 100 | 100 | 100 | 100 | 100 | 100 | 100 | 100 | 100 | 100 |
| | Writability (pencil) | ⓞ | ⓞ | ⓞ | ⓞ | ⓞ | ⓞ | ⓞ | o | o | x |
| Physi-cal prop-erties | Opacity (%) | 90 | 92 | 94 | 95 | 95 | 93 | 92 | 91 | 93 | 89 |
| | Water penetration elongation (%) | 0.3 | 0.3 | 0.3 | 0.3 | 0.3 | 0.3 | 0.3 | 0.3 | 0.3 | 0.30 |
| | Water-resistant surface abrasion (times) | >100 | >100 | >100 | >100 | 80 | >100 | >100 | >100 | >100 | >100 |
| | Surface resistivity ($\Omega$) | $8 \times 10^{13}$ | $4 \times 10^{14}$ | $7 \times 10^{15}$ | $8 \times 10^{15}$ | $4 \times 10^{12}$ | $3 \times 10^{14}$ | $9 \times 10^{14}$ | $9 \times 10^{15}$ | $>10^{16}$ | $>10^{16}$ |
| | Printability Times of paper clogging occurred due to overlapping feed when 2000 sheets of paper (A3 size) are printed in an off-set printing machine. | 0 | 0 | 1 | 3 | 0 | 0 | 1 | 3 | >10 | >10 |

## Claims

1. A waterproof laminated paper comprising a paper substrate having at least one thermoplastic resin layer laminated on a surface thereof, in which at least one top thermoplastic resin layer comprises from 20% to 80% by weight, relative to the total weight of the thermoplastic resin layer, of an inorganic filler.

2. A paper according to claim 1, wherein the substrate has at least one thermoplastic resin layer comprising no inorganic filler laminated thereon and at least one top thermoplastic resin layer comprising an inorganic filler laminated on the resin layer comprising no inorganic filler.

3. A paper according to claim 1 or 2, wherein the surface resistivity of the thermoplastic resin layer containing an inorganic filler furthermost from the substrate is $1 \times 10^{10}$ to $9 \times 10^{15}$ $\Omega$ per square.

4. A paper according to any one of the preceding claims, wherein the inorganic filler is mainly composed of calcium carbonate and titanium dioxide in a weight ratio of 99:1 to 55:45.

5. A paper according to any one of the preceding claims, wherein the thermoplastic resin layer furthermost from the substrate comprises 30% to 50% by weight of an inorganic filler mainly composed of calcium carbonate and titanium dioxide in a weight ratio of 80:20 to 60:40.

6. A paper according to any one of the preceding claims, wherein the thermoplastic resin is a polypropylene resin having a melt flow rate of 15 to 50 g/10 min at 230°C and a melt tension of at least 0.3 g as determined at 230°C under the conditions of L/D of extruder orifice of 3.8, extrusion speed of 15 mm/min, and take-off speed of 15 m/min.

7. A paper according to any one of claims 1 to 5, wherein the thermoplastic resin is a polyethylene resin having a melt flow rate of 3 to 20 g/10 min at 190°C and a melt tension of at least 0.3 g as determined at 190°C under the conditions of L/D of extruder orifice of 3.8, extrusion speed of 15 mm/min, and take-off speed of 15 m/min.

8. A process for producing a paper as defined in any one of the preceding claims, which comprises extruding at least one thermoplastic resin, in a molten state, comprising from 20 to 80% by weight, relative to the total weight of the thermoplastic resin, of an inorganic filler through a T-die and laminating the extruded resin layer on a paper substrate.

9. A process according to claim 8, which comprises co-extruding (i) the at least one thermoplastic resin comprising 20 to 80% by weight of an inorganic filler and (ii) at least one thermoplastic resin, in a molten state, comprising no inorganic filler, together through a T-die and laminating the thus extruded resin layers (i) and (ii) on a paper substrate such that the resin layer (ii) contacts a surface thereof.

10. A process according to claim 8, which comprises extruding at least one thermoplastic resin, in a molten state, comprising no inorganic filler on a surface of a paper substrate and subsequently extruding the at least one thermoplastic resin comprising 20% to 80% by weight, of an inorganic filler on the at least one thermoplastic resin layer.

11. A process according to any one of claims 8 to 10, wherein the surface of the laminated molten resin is exposed to ozone or an ozone-containing gas at a temperature of not more than 290°C prior to lamination of the resin layer on the surface of the paper substrate.

12. A process according to any one of claims 8 to 11, wherein the surface of the paper substrate to be laminated is subjected to a corona discharge treatment or a flame treatment.

## Patentansprüche

1. Wasserdichtes Kunstharzhartpapier, das ein Papiersubstrat umfaßt, auf dessen Oberfläche zumindest eine thermoplastische Harzschicht laminiert ist, wobei zumindest eine obere thermoplastische Harzschicht im Verhältnis zum Gesamtgewicht der thermoplastischen Harzschicht von 20 bis 80 Gew.-% eines anorganischen Füllstoffs umfaßt.

2. Papier nach Anspruch 1, worin das Substrat zumindest eine auflaminierte thermoplastische Harzschicht, die keinen anorganischen Füllstoff aufweist, und zumindest eine obere thermoplastische Harzschicht umfaßt, die einen anorganischen Füllstoff umfaßt und auf die Harzschicht laminiert ist, die keinen anorganischen Füllstoff umfaßt.

3. Papier nach Anspruch 1 oder 2, worin der Oberflächenwiderstand der vom Substrat am weitesten entfernten thermoplastischen Harzschicht, die den anorganischen Füllstoff enthält, $1\times10^{10}$ bis $9\times10^{15}$ Ω/Quadrat beträgt.

4. Papier nach einem der vorstehenden Ansprüche, worin der anorganische Füllstoff hauptsächlich aus Calciumcarbonat und Titandioxid in einem Gewichtsverhältnis von 99:1 bis 55:45 zusammengesetzt ist.

5. Papier nach einem der vorstehenden Ansprüche, worin die vom Substrat am weitesten entfernte thermoplastische Harzschicht 30 bis 50 Gew.-% des anorganischen Füllstoffs umfaßt, der hauptsächlich aus Calciumcarbonat und Titandioxid in einem Gewichtsverhältnis von 80:20 bis 60:40 zusammengesetzt ist.

6. Papier nach einem der vorstehenden Ansprüche, worin das thermoplastische Harz Polypropylenharz mit einer Schmelzgeschwindigkeit von 15 bis 50 g/10 min bei 230°C und eine Schmelzspannung von mindestens 0,3 g ist, bei 230°C bei Bedingungen der Öffnung des Extruders von L/D = 3,8, einer Extrusionsgeschwindigkeit von 15 mm/min und einer Aufnahmegeschwindigkeit von 15 m/min bestimmt.

7. Papier nach einem der Ansprüche 1 bis 5, worin das thermoplastische Harz ein Polyethylenharz mit einer Schmelzgeschwindigkeit von 3 bis 20 g/10 min bei 190°C und einer Schmelzspannung von mindestens 0,3 g ist, bei 190°C unter den Bedingungen der Öffnung des Extruders von L/D = 3,8, einer Extrusionsgeschwindigkeit von 15 mm/min und einer Aufnahmegeschwindigkeit von 15 m/min gemessen.

8. Verfahren zur Herstellung von Papier nach einem der vorstehenden Ansprüche, welches die Extrusion von zumindest einem thermoplastischen Harz im geschmolzenen Zustand, das im Verhältnis zum Gesamtgewicht des thermoplastischen Harzes von 20 bis 80 Gew.-% eines anorganischen Füllstoffs umfaßt, durch eine T-Düse und das Laminieren der extrudierten Harzschicht auf ein Papiersubstrat umfaßt.

9. Verfahren nach Anspruch 8, das die Coextrusion von (i) zumindest einem thermoplastischen Harz, das 20 bis 80 Gew.-% eines anorganischen Füllstoffs umfaßt, und (ii) zumindest einem thermoplastischen Harz in geschmolzenem Zustand, das keinen anorganischen Füllstoff umfaßt, durch eine T-Düse und das Laminieren der so extrudierten Harzschichten (i) und (ii) auf ein Papiersubstrat umfaßt, so daß die Harzschicht (ii) dessen Oberfläche berührt.

10. Verfahren nach Anspruch 8, das die Extrusion von zumindest einem thermoplastischen Harz im geschmolzenen Zustand, das keinen anorganischen Füllstoff umfaßt, auf die Oberfläche des Papiersubstrats und die anschließende Extrusion von zumindest einem thermoplastischen Harz, das 20 bis 80 Gew.-% eines anorganischen Füllstoffs umfaßt, auf die zumindest eine thermoplastische Harzschicht umfaßt.

11. Verfahren nach einem der Ansprüche 8 bis 10, worin die Oberfläche des laminierten geschmolzenen Harzes vor der Laminierung der Harzschicht auf die Oberfläche des Papiersubstrats Ozon oder einem ozonhaltigen Gas bei einer Temperatur von nicht mehr als 290°C ausgesetzt wird.

12. Verfahren nach einem der Ansprüche 8 bis 11, worin die zu laminierende Oberfläche des Papiersubstrats einer Behandlung durch Koronaentladung oder einer Flammbehandlung unterzogen wird.

**Revendications**

1. Papier stratifié imperméable comprenant un substrat de papier ayant au moins une couche de résine thermoplastique stratifiée sur une surface de celui-ci, dans lequel au moins une couche supérieure de résine thermoplastique comprend de 20% à 80% en poids, par rapport au poids total de la couche de résine thermoplastique, d'une charge minérale.

2. Papier selon la revendication 1, dans lequel le substrat possède au moins une couche de résine thermoplastique ne comprenant aucune charge minérale stratifiée sur lui et au moins une couche supérieure de résine thermoplastique comprenant une charge minérale stratifiée sur la couche de résine ne comprenant aucune charge minérale.

3. Papier selon la revendication 1 ou 2, dans lequel la résistivité superficielle de la couche de résine thermoplastique contenant une charge minérale la plus éloignée du substrat vaut $1 \times 10^{10}$ à $9 \times 10^{15}$ $\Omega$ par centimètre carré.

4. Papier selon l'une quelconque des revendications précédentes, dans lequel la charge minérale est principalement composée de carbonate de calcium et de dioxyde de titane en une proportion pondérale de 99:1 à 55:45.

5. Papier selon l'une quelconque des revendications précédentes, dans lequel la couche de résine thermoplastique la plus éloignée du substrat comprend 30% à 50% en poids d'une charge minérale principalement composée de carbonate de calcium et de dioxyde de titane en une proportion pondérale de 80:20 à 60:40.

6. Papier selon l'une quelconque des revendications précédentes, dans lequel la résine thermoplastique est une résine polypropylène ayant un débit à l'état fondu de 15 à 50 g/10 min à 230°C et une tension à l'état fondu d'au moins 0,3 g, déterminée à 230°C dans des conditions de L/D d'un orifice d'extrudeuse de 3,8, à une vitesse d'extrusion de 15 mm/min, et une vitesse d'extraction de 15 m/min.

7. Papier selon l'une quelconque des revendications 1 à 5, dans lequel la résine thenmoplastique est une résine de polyéthylène ayant un débit à l'état fondu de 3 à 20 g/10 min à 190°C et une tension à l'état fondu d'au moins 0,3 g, déterminée à 190°C dans des conditions de L/D d'un orifice d'extrudeuse de 3,8, à une vitesse d'extrusion de 15 mm/min, et une vitesse d'extraction de 15 m/min.

8. Procédé de production d'un papier défini dans l'une quelconque des revendications précédentes, qui comprend une extrusion d'au moins une résine thermoplastique, dans un état fondu, comprenant de 20 à 80% en poids, par rapport au poids total de la résine thermoplastique, d'une charge minérale à travers une filière en forme de T, et une stratification de la couche de résine extrudée sur un substrat de papier.

9. Procédé selon la revendication 8, qui comprend une co-extrusion (i) d'au moins une résine thermoplastique comprenant 20 à 80% en poids d'une charge minérale, et (ii) au moins une résine thermoplastique, dans un état fondu, ne comprenant aucune charge minérale, ensemble à travers une filière en forme de T, et une stratification des couches de résines ainsi extrudées (i) et (ii) sur un substrat de papier de façon que la couche de résine (ii) soit en contact avec une surface de celui-ci.

10. Procédé selon la revendication 8, qui comprend l'extrusion d'au moins une résine thermoplastique, dans un état fondu, ne comprenant aucune charge minérale sur une surface d'un substrat de papier et, ultérieurement, l'extrusion d'au moins une résine thermoplastique comprenant 20% à 80% en poids, d'une charge minérale sur au moins une couche de résine thermoplastique.

11. Procédé selon l'une quelconque des revendications 8 à 10, dans lequel la surface de la résine fondue stratifiée est exposée à l'ozone ou à un gaz contenant de l'ozone à une température de 290°C maximum avant la stratification de la couche de résine sur la surface du substrat de papier.

12. Papier selon l'une quelconque des revendications 8 à 11, dans lequel la surface du substrat de papier, destinée à être stratifiée, est soumise à un traitement de décharge corona ou à un traitement par flam-mage.